(19) Europäisches Patentamt
European Patent Office
Office européen des brevets

(11) EP 3 543 212 A1

(12) EUROPEAN PATENT APPLICATION
published in accordance with Art. 153(4) EPC

(43) Date of publication:
25.09.2019 Bulletin 2019/39

(51) Int Cl.:
C01B 33/12 (2006.01)     A61K 47/04 (2006.01)
C01B 33/18 (2006.01)     C01B 37/02 (2006.01)
G01N 30/88 (2006.01)

(21) Application number: 17870944.0

(22) Date of filing: 15.11.2017

(86) International application number:
PCT/JP2017/041089

(87) International publication number:
WO 2018/092804 (24.05.2018 Gazette 2018/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 16.11.2016 JP 2016223067

(71) Applicant: Mitsubishi-Chemical Foods
Corporation
Tokyo 100-8251 (JP)

(72) Inventors:
• KATSUKI, Takanobu
Tokyo 100-8251 (JP)
• ADACHI, Kouichi
Tokyo 100-8251 (JP)
• SHIMOYAMA, Masaru
Chiyoda-ku,
Tokyo 1008251 (JP)

(74) Representative: Hoffmann Eitle
Patent- und Rechtsanwälte PartmbB
Arabellastraße 30
81925 München (DE)

(54) SILICA POWDER FOR QUANTITATIVE SUPPLY, PURIFICATION KIT FOR BIOLOGICAL MATERIAL USING SAME, AND METHOD FOR PRODUCING SAME

(57) An object of the present invention is to provide a silica powder having enhanced handleability and quantitative feeding performance, a purification kit for a biomaterial, wherein a plurality of individual compartments of a container are filled with the accurately and quantitatively determined silica powder, and a production method for the kit, and the like. The silica powder for quantitative feeding is a silica powder, wherein 99 mass% or more of particles pass through when the silica powder is sieved through a sieve with a nominal mesh opening of 250 $\mu$m in accordance with JIS standard sieve list (JIS Z8801-1982) for 1 minute, and a mass change on a sieve with a nominal mesh opening of 106 $\mu$m is 1 mass% or less, when the silica powder is sieved through the sieve for 1 minute.

EP 3 543 212 A1

## Description

TECHNICAL FIELD

The present invention relates to a silica powder suitable for accurate quantitative feeding, a purification kit for a biomaterial using the same and a method for producing the kit.

BACKGROUND ART

Silica powders such as silica gel and mesoporous silica are used for a wide range of applications such as desiccants, humidifying agents, deodorants, agricultural fertilizers, catalyst carriers, abrasives, filter aids, separating agents, adsorbents, cosmetic carriers, food additives, and the like. In recent years, in addition to drug carriers (see Patent Literature 1 and 2), the range of applications is increasing such as the use of silica powders in selective adsorption and desorption materials for biomaterials in order to efficiently separate and recover biomaterials such as peptides from biological fluids such as blood (Patent Literature 3). Hence, demands for physical properties including the surface area, pore diameter, pore volume, and pore size distribution, etc., of silica powders are increasing according to these various applications. High quality silica powders of various grades are commercially available.

PRIOR ART REFERENCES

PATENT LITERATURE

Patent literature 1: Japanese Patent Laid-Open No. 2011-225380
Patent Literature 2: Japanese Patent Laid-Open No. 2013-230955
Patent Literature 3: International Publication No. WO 2016/017811

SUMMARY OF THE INVENTION

PROBLEMS TO BE SOLVED BY THE INVENTION

In recent years, when silica powders are used for various applications, a need to accurately and individually weigh (quantitative feeding/dispensing) a trace amount of the powder is increasing. For example, materials for selective adsorption and desorption of drugs or biomaterials are required to enable accurate individual weighing of silica powders of interest on the order of hundreds mg or less or optionally several to several tens of mg. Particularly medical applications and applications for inspection of biomaterials require more precise weighing. For example, when a drug is carried on the surface of a silica powder, the amplitude of the amount of the silica powder used for filling is linked directly to the amplitude of the amount of the drug to be carried. Accordingly, it has been strongly desired to reduce the amplitude filling with the silica powder.

Various modes of apparatuses for filling with trace amounts of powders (quantitative feeders) have been used conventionally in order to accurately and individually weigh such powders and various apparatuses with improved weighing precision have been proposed. However, precision for weighing powders is not determined by the apparatus alone, and thus improvement in precision is limited if only the apparatus is improved. Further, as the amount of a weighing object becomes smaller, the handleability of powders tends to decrease.

The present invention has been achieved in view of these problems. An object of the present invention is to provide a silica powder with enhanced handleability and quantitative feeding performance, as well as a purification kit for a biomaterial, wherein a plurality of individual compartments of a container are filled with the silica powder that has been accurately determined quantitatively and a production method for the kit.

Note that, the objects of the present invention are not limited to the above objects and exerting effects resulting from each constitution described in the following embodiments of the present invention, which cannot be achieved by conventional technology can be another object of the present invention.

MEANS FOR SOLVING THE PROBLEMS

As a result of intensive studies to achieve the above objects, the present inventors have discovered that the objects can be achieved by the use of a silica powder having a specific particle size distribution and thus have completed the present invention. Specifically, the present invention provides various specific aspects as follows.

[1] A silica powder, wherein 99 mass% or more of particles pass through when the silica powder is sieved through a sieve with a nominal mesh opening of 250 μm in accordance with JIS standard sieve list (JIS Z8801-1982) for 1 minute, and a mass change on a sieve with a nominal mesh opening of 106 μm is 1 mass% or less, when the silica powder is sieved through the sieve for 1 minute.

[2] The silica powder for quantitative feeding according to [1], wherein the silica powder comprises non-crystalline silica.

[3] The silica powder for quantitative feeding according to [1] or [2], wherein the silica powder comprises mesoporous silica having meso pores with a pore diameter of 2 nm to 50 nm.

[4] The silica powder for quantitative feeding according to any one of [1] to [3], wherein the silica powder has a pore volume per unit weight of 0.1 ml/g to 1.5 ml/g.

[5] The silica powder for quantitative feeding according to any one of [1] to [4], wherein the silica powder has a specific surface area of 100 $m^2$/g to 1200 $m^2$/g.

[6] A purification kit for a biomaterial, comprising at least:

one or more containers having a plurality of individual compartments; and
the silica powder for quantitative feeding according to any one of [1] to [5], wherein
the individual compartments of the one or more containers are each filled with the silica powder in such a manner that average filling amount f (mg) and standard deviation σ (mg) satisfy the following condition;

```
standard deviation σ (mg)/average filling amount f (mg) =
less than 1.0 (%)
```

(in the above condition, the number of samples "n" is at least 10).

[7] A method for producing a purification kit for a biomaterial, comprising at least:

a step of preparing one or more containers having a plurality of individual compartments; and
a step of quantitatively feeding the silica powder for quantitative feeding according to any one of [1] to [5] into the individual compartments of the one or more containers in such a manner that average filling amount f (mg) and standard deviation σ (mg) satisfy the following condition;

```
standard deviation σ (mg)/average filling amount f (mg) =
less than 1.0 (%)
```

(in the above condition, the number of samples "n" is at least 10).

ADVANTAGEOUS EFFECT OF INVENTION

According to the present invention, a silica powder for quantitative feeding, which is excellent in handleability and quantitative feeding performance, a purification kit for a biomaterial using the same, and a method for producing the kit can be realized.

BRIEF DESCRIPTION OF DRAWINGS

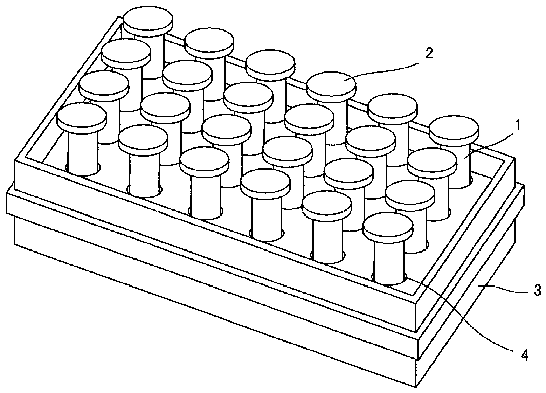

The figure is a schematic diagram showing an embodiment of a container for housing the silica powder.

DESCRIPTION OF EMBODIMENTS

The embodiments of the present invention are as described in detail. Note that the following embodiments are examples (typical examples) of the embodiments of the present invention, and the present invention is not limited thereto. The present invention can be modified arbitrarily and implemented within the scope of the invention. Furthermore, note that in the description, all ranges of numerical figures or physical property values represented using "to" sandwiched by endpoints are inclusive; that is, the endpoints are included along with what lies in between.

[Silica Powder for Quantitative Feeding]

The silica powder for quantitative feeding of the embodiments comprises a silica powder wherein 99 mass% or more of particles pass through when the silica powder is sieved through a sieve with a nominal mesh opening of 250 μm in accordance with JIS standard sieve list (JIS Z8801-1982) for 1 minute, and a mass change on a sieve with a nominal mesh opening of 106 μm is 1 mass% or less, when the silica powder is sieved through the sieve for 1 minute. In the Description, the term "silica powder for quantitative feeding" refers to a silica powder that is not yet used for filling of a container, etc. The silica powder for quantitative feeding is particularly preferably a silica powder for accurate quantitative determination.

A silica powder to be used herein is not particularly limited, as long as it has the above specific particle size distribution. Examples of the types of silica include, but are not particularly limited to, crystalline silica such as natural quartz and zeolite, and non-crystalline silica such as silica gel and mesoporous silica. In view of adsorption and desorption, etc., of a biomaterial or chemical substance, porous silica having pores such as zeolite, silica gel, and mesoporous silica is preferred. Note that in the Description, the term "mesoporous silica" refers to silica with meso pores having a pore diameter of generally 2 nm to 50 nm, and preferably 3 nm to 20 nm. Here, the size of the pore diameter of porous silica having pores can be appropriately set according to the required performance.

In addition, mesoporous silica may have pores such as macro pores that are not included in meso pores, as long as it has meso pores. In view of selective adsorption or separation and recovery etc., of biomaterials, mesoporous silica substantially comprises meso pores alone is preferred. Here, such silica described by the expression "substantially comprises meso pores alone" refers to porous silica wherein the total volume of meso pores having a pore diameter of 2 nm to 50 nm is at least 90 vol% of the total pore volume. Here, the pore diameter of porous silica having pores can be found from a graph produced by plotting a pore distribution curve calculated by BJH method as described in E. P. Barrett, L. G. Joyner, P. H. Haklenda, J. Amer. Chem. Soc., vol. 73, 373 (1951) from an isothermal adsorption·desorption curve as measured by a nitrogen gas adsorption and desorption method. Here, the "pore distribution curve" represents a differential pore volume, specifically, a differential nitrogen gas adsorption amount ($\Delta V/\Delta$ (log d)) with respect to pore diameter d (nm), where the above V denotes the adsorption volume of a nitrogen gas. Furthermore, values listed in the catalogs can be employed for commercially available products.

Moreover, the pore volume per unit weight (the amount represented by the term "pore volume/weight" is simply referred to as "pore volume" in the Description.) of porous silica having pores is not particularly limited. In view of selective adsorption, adsorption and desorption properties, etc., of biomaterials and chemical substances, the pore volume is preferably 0.1 ml/g or more, more preferably 0.2 ml/g or more, and further preferably 1.5 ml/g or less, and even more preferably 1.2 ml/g or less. The pore volume of the above lower limit or more tends to result in high adsorption·desorption performance, and the pore volume of the above upper limit or less makes the pore structure or particles difficult to be broken by liquid contact treatment and makes it easy to ensure adsorption·desorption selectivity. Hence, these ranges are preferred. The pore volume of porous silica having pores can be found from the adsorption amount of a nitrogen gas under relative pressure of 0.98 according to the adsorption isothermal line. Furthermore, values listed in the catalogs can be employed for commercially available products.

The shape of the silica powder for quantitative feeding is not particularly limited. The silica powder may be granular such as crushed, spherical or the like, and, may be even monolithic or granulated particles, or may be honeycomb particles. In the case of granulated particles, those with large gaps between primary particles are preferable in terms of contact efficiency between particles and a biological fluid, etc.

The angle of repose of the silica powder for quantitative feeding is not particularly limited and in view of flowability or the like of the powder such as clogging in a hopper, ranges from preferably 20° to 40°, and more preferably 20° to 30°. The angle of the above lower limit or more is preferred in that since excessive fluidity is hardly imparted and a powder leakage from the filling machine can be easily inhibited. The angle of the above upper limit or less is preferred in that clogging in a hopper can be easily suppressed. Note that in the Description, the angle of repose of the silica powder is measured using an apparatus for measuring the angle of repose by a cylindrical rotation method (Tsutsui Rikagaku Kikai Co., Ltd.). A well washed and dried cylindrical sample container is filled with a sample such that about a half of the cylinder volume is filled with the sample. After rotating the container at 2 rpm for 3 minutes, rotation is stopped, and then the angle of repose is measured. Measurement is conducted three times, and the average value is designated as the angle of repose of the powder.

The bulk density of the silica powder for quantitative feeding is not particularly limited, and ranges from preferably 0.5 to 1.3 g/mL, and more preferably 0.7 to 1.3 g/mL in view of the limitation or the like of the size of a hopper or filling container. The bulk density of the above lower limit or more is preferred in that it hardly leads to a bulky state and the like and can reduce the container size for filling with a predetermined weight thereof. The bulk density of the above upper limit or less is preferred in that the pore volume can be easily secured, and the adsorption and desorption performance can be easily ensured. Note that in the Description, the bulk density of the silica powder is measured using a bulk density measuring instrument (in accordance with JIS K6891, Tsutsui Scientific Instruments, Co., Ltd.). A sample is introduced into the funnel of a specific gravity meter with a damper inserted thereinto, the damper is quickly pulled out to drop the sample into a weighing bottle, an excess sample portion from the top of the weighing bottle is leveled off using a flat plate, and then the weight is measured for calculation. Measurement was conducted three times, and the average value of the measurements is designated as the bulk density of the powder.

The size of the silica powder for quantitative feeding is not particularly limited and may be determined as appropriate depending on applications and required performance. For example, in view of selective adsorption and good adsorption and desorption of biomaterials and chemical substances, 80% or more, preferably 90% or more, more preferably 95% or more of all particles have preferably a maximum Feret's diameter of 20 $\mu$m or more, more preferably 50 $\mu$m or more, and preferably 1 mm or less, and more preferably 800 $\mu$m or less. Such a maximum Feret's diameter of the above lower limit or more is preferred in that dusting can be suppressed because of few fines and handling is easy. Such a maximum Feret's diameter of the above upper limit or less is preferred in that the resulting particles are not excessively large and a predetermined amount thereof can be easily weighed. Here, the term "maximum Feret's diameter" refers to the maximum value of the so-called unidirectional tangential diameter, which corresponds to the diameter of spherical particles and, in the case of particles of different shapes such as crushed particles, corresponds to the length of the portion where the distance between two unidirectional tangential lines parallel to each other sandwiching the particles is the longest. The maximum Feret's diameter can be found by observing particles under an optical microscope, and then performing image analysis (hereinafter, the maximum Feret's diameter may be referred to as "particle size"). The proportion of particles having a given diameter in all particles can be found by arbitrarily selecting 100 or more particles. Furthermore, values listed in the catalogs can be employed for commercially available products.

Similarly, the volume average particle diameter D50 of the silica powder for quantitative feeding is not particularly limited and may be determined as appropriate depending on applications and required performance. For example, in view of selective adsorption and good adsorption and desorption of biomaterials and chemical substances, the volume average particle diameter D50 of the silica powder for quantitative feeding is preferably 50 $\mu$m or more, more preferably 70 $\mu$m or more, preferably 700 $\mu$m or less, and more preferably 600 $\mu$m or less. The volume average particle diameter D50 of the above lower limit or more is preferred in that dusting can be suppressed because of fewer fines and handling is easy. The volume average particle diameter D50 of the above upper limit or less is preferred in that the resulting particle diameters are not excessively large and a predetermined amount thereof can be easily weighed. Here, the term "volume average particle diameter D50" refers to a volume average particle size of the primary particles. The volume average particle diameter can be found from a result obtained by measuring a particle size distribution using a laser diffraction·scattering particle size distribution measuring apparatus (e.g., Seishin Enterprise Co., Ltd., Laser Micron Sizer LMS-24, NIKKISO Co., Ltd., Microtrac MT3300EX II). Furthermore, values in the catalogs can be employed for commercially available products.

Meanwhile, the specific surface area of the silica powder for quantitative feeding is not particularly limited, and is, in view of powder strength, durability, and desorption and adsorption performance etc., generally preferably 100 m$^2$/g or more, more preferably 200 m$^2$/g, and preferably 1200 m$^2$ or less, and more preferably 1000 m$^2$/g or less. The specific surface area of the above lower limit or more is preferred in that the adsorption amount can be easily ensured. The specific surface area of the above upper limit or less is preferred in that the powder strength can be ensured and the pore structure and particles are hardly broken by liquid contact treatment. The specific surface area can be measured by a BET one-point method involving nitrogen gas adsorption and desorption.

The silica powder for quantitative feeding of the embodiment is characterized by having a particle size distribution such that, in view of accurate quantitative feeding, 99 mass% or more and preferably 99.5 mass% or more of particles pass through when the silica powder is sieved through a sieve with a nominal mesh opening of 250 $\mu$m in accordance with JIS standard sieve list (JIS Z8801-1982) for 1 minute, and a mass change on a sieve with a nominal mesh opening of 106 $\mu$m is 1 mass% or less, and preferably 0.8 mass% or less when the silica powder is sieved through the sieve for 1 minute. According to the findings of the present inventors, the presence of microparticles with a sieve size of less than 106 $\mu$m is known not only to adhere to the container upon weighing and to have adverse effects on the working environment due to their swirling up upon weighing, but also to increase the amplitude upon weighing because of their uneven distribution among the powder. The presence of coarse particles with a sieve size of greater than 250 $\mu$m causes increased amplitude upon weighing and a significant variation in weighing accuracy. Therefore, the silica powder produced to comprise almost no coarse particles with a sieve size of greater than 250 $\mu$m and almost no microparticles with a sieve size of less than 106 $\mu$m can greatly enhance the accuracy of individual weighing on the order of several hundreds of mg or less and if necessary several to several tens of mg without unduly impairing the handleability of the powder. Note that in the Description, the above sieving is carried out under conditions in accordance with "6.1 Dry screening test" of JIS K0069.

Note that, the outer surface of the silica powder for quantitative feeding may be subjected to surface treatment such as hydrophobic treatment. For example, the surface of the silica powder may be modified with an octadecylsilyl group or the like in order to improve the compatibility with an organic solvent. Furthermore, the surface of the silica powder may be modified with an aminopropylsilyl group for adsorption of a positively-charged substance to the silica powder.

The above-described silica powder that can be used herein may be any of a natural product or a synthetic product and the production method therefor is not particularly limited. Examples of a method for producing the silica powder include dry methods such as a pulverizing method, a combustion method, and an arc method, and wet methods such as a precipitation method, a gel method, a sol-gel method, and a template method. As a method for producing porous silica having pores, for example, a production method described in Japanese Patent Laid-Open No. 2002-080217, Japanese Patent Laid-Open No.2008-222552 or the like, which involves hydrolyzing silicon alkoxide and then performing hydrothermal treatment without substantial maturation, is preferably employed in view of industrial and economic efficiency.

Moreover, in order to easily obtain the silica powder for quantitative feeding of the embodiment having the above particle size distribution with good reproducibility, a silica powder obtained by a known method is preferably subjected to classification treatment. Classification treatment is roughly categorized into sieving using a sieve and fluid classification and the latter is further categorized into dry classification and wet classification. Known examples of the principles thereof include treatment using gravitational field, treatment using inertial force, and treatment using centrifugal force, but the type is not particularly limited.

Note that when the silica powder for quantitative feeding according to the embodiments is obtained via industrial classification of a silica powder obtained by the above synthesis or the like, a vibratory classifier using a sieve is preferably used. With such a vibratory classifier, a desired classification size can be easily adjusted only by changing the mesh opening of the sieve net. In particular, when the silica powder for quantitative feeding according to the embodiments is obtained, the silica powder can be obtained by arranging a sieve with a mesh opening of 106 $\mu$m and a sieve with a mesh opening of 250 $\mu$m in accordance with JIS Z8801-1982 standard in such a manner that the sieve with a mesh opening of 250 $\mu$m is placed in the upper stage, introducing the silica powder obtained by the above synthesis or the like onto the sieve in the upper stage, and then classifying until the mass change between the silica powder in each sieve and that on a receiving tray at the bottom is 1 mass% or less.

As a method for filling a container with the silica powder is not particularly limited, an automatic filling machine is preferably used. Examples thereof include a cup (mass)-type filling machine, a rotary-type filling machine, a vibration-type filling machine, and a screw (auger)-type filling machine. Of these, a screw (auger)-type filling machine can easily control the filling amount with the use of the pitch and the rotational speed of the screw, has a high filling rate, and thus exhibits productivity significantly higher than that of other filling machines.

Furthermore, the silica powder for quantitative feeding according to the embodiments is suitable for accurate quantitative feeding and is excellent in quantitative feeding of a trace amount of the silica powder. Therefore, the silica powder is effective upon filling with 50 mg or more and 500 mg or less thereof, is particularly more effective in filling with 60 mg or more, particularly effective in filling with 70 mg or more, as well as effective in filling with 400 mg or less, further effective in filling with 300 mg or less, and particularly effective in filling with 200 mg or less thereof.

[Purification Kit for Biomaterial]

The silica powder for quantitative feeding of the embodiments has enhanced handleability and enhanced quantitative feeding performance. The use of the silica powder for various modes of micro-filling machines (quantitative feeder) enables quantitative determination without sacrificing handleability. Therefore, the silica powder for quantitative feeding of the embodiment can be effectively used in the form of purification kit for a biomaterial, in which pre-quantitatively-determined silica powder is contained in a plurality of individual compartments of a container, for example.

Specifically, according to the handleability and quantitative feeding performance of the silica powder for quantitative feeding of the embodiments, a purification kit for a biomaterial, which comprises one or more containers having a plurality of individual compartments, can be realized, wherein each individual compartment contains quantitatively determined silica powder in such a manner that the following conditions are satisfied. Note that in the Description, the term "silica powder for accurate quantitative determination" refers to a silica powder among silica powders for quantitative determination, which satisfies the following conditions:

```
standard deviation σ (mg)/average filling amount f (mg) =

less than 1.0(%)
```

(in the above conditions, the number of samples "n" is at least 10)

Specifically, upon filling with 100 mg of the silica powder, standard deviation $\sigma$ of the quantitatively determined silica powder in each individual compartment preferably satisfies the following equation.

Standard deviation $\sigma$: $\sigma < 1.0$ (mg)

In the description, the number of samples "n" (the number "n" of objective individual compartments) serving as the population for calculating standard deviation σ and average filling amount f for accurate quantitative determination is 10 or more from a statistical point of view. Furthermore, when "n" samples (the number "n" of samples) are extracted and when the number of individual compartments in a purification kit (1 product) for one biomaterial is 10 or more, all individual compartments are subjected to extraction. Otherwise, a plurality of products for which the same weighing and filling methods are employed are collected and combined, and thus 10 or more individual compartments may be subjected to extraction.

The above-described standard deviation σ (mg)/average filling amount f (mg) is preferably 0.8% or less, and more preferably 0.7% or less. Note that the lower limit of σ/f is not particularly limited and may be 0 (%) or more, and is preferably 0.1 (%) or more in view of productivity and economic efficiency. If the value of σ or σ/f is lower than the above preferred lower limit, a powder having a single particle size and exhibiting extremely low variation and an accurate filling machine are required. This can increase the cost significantly and cause a problem of being impractical. The value of σ or σ/f of higher than the above upper limit increases lot-to-lot difference in the total surface area of the silica powder used for filling. For example, when a drug is carried by the silica powder, a problem can arise such that the amplitude of the amount of carried drug is increased.

A container having a plurality of individual compartments is not particularly limited as long as individual compartments can be filled with the silica powder. An example thereof is a container having a plurality of openings. Materials constituting such a container are not particularly limited and examples of the materials include resin and metal.

Moreover, in the embodiments, the silica powder, with which one or more containers having a plurality of individual compartments are filled, may be the silica powder, with which individual compartments (openings) installed in one or more containers are directly filled, or the silica powder, with which tubular containers etc., arranged in individual compartments are filled, as shown in the figure, for example. In view of handleability, as shown in the figure, a rack is used as a container having a plurality of individual compartments (openings), wherein a plurality of tubular containers arranged in the individual compartments are preferably filled with the silica powder.

A tubular container is not particularly limited, and preferably has a lid 2 as shown in the figure. Moreover, the shape of the bottom section of the tubular container is not particularly limited, and is preferably a round-bottom section in view of the handleability of the silica powder for quantitative feeding.

The capacity of a tubular container is preferably 1.0 mL or more, further preferably 1.5 mL or more, and particularly preferably 2.0 mL or more. Further, the tubular container is preferably a substantially transparent or translucent container in view of facilitating the visibility of the content.

As a material constituting a tubular container, a substantially transparent or translucent resin is preferably used. More specifically a polyolefin resin such as polyethylene and polypropylene, and a polyester resin such as PET are preferably used. Among these, preferably a polyolefin-based resin, and more preferably polypropylene is used.

A lid may be integrally formed with a tubular container or a lid that is separately prepared, as long as the tubular container can be sealed. For example, as a lid, a cap that closes the opening through engagement or screwing with a tubular container so as to seal the interior space of the tubular container can be used. In this case, various known capped tubular containers such as so-called cap type, hinged cap type, and screw cap type containers can be used as tubular containers. Also, members constituting the lid may be made of the same material as or a material differing from that of the tubular container. Preferable examples thereof include resinous materials. In addition, a sealant may be used as a lid for a tubular container to seal the opening of the tubular container.

As described above, a rack-shaped container is preferably used as a container having a plurality of individual compartments, as shown in the figure.

A typical example of a rack is a rack wherein a plurality of openings is provided on the top surface of the substantially rectangular rack, in such a manner that tubular containers can be housed upright and the lids of the tubular containers are on the upper side. The use of such a rack can prevent the containers from falling down to cause the silica powder to adhere to the lid. Hence, the silica powder used for filling can be efficiently used as a material for adsorption of a biomaterial.

Further, in order to protect the top of containers housed in a rack, a rack lid may be used. When a rack lid is used, the rack may have irregularities for engagement with the rack lid.

Each opening provided on the top surface of a rack may be of any size, as long as a tubular container can be housed, and may have a diameter substantially the same as the maximum diameter of the tubular container, or a diameter larger than the maximum diameter of the tubular container. Further, the depth of each opening is not particularly limited, may be substantially the same as the height of a tubular container, may shallower than the height of a tubular container, or may be about 1/2 the height of a tubular container. The number of openings provided on the top surface of the rack is adequately determined depending on the size of the rack top surface, the diameter of a tubular container and the like. The openings are preferably provided at intervals such that lid edges do not overlap each other when tubular containers housed in the rack are sealed by the lids. The number of openings may be specifically 10 or more, 20 or more, or 30 or more. Moreover, the number of openings may be 100 or less, 80 or less, or 60 or less.

Openings provided on the top surface of a rack may be arranged at random, may be aligned in view of housing many tubular containers, or may be arranged so that tubular containers can be placed at the highest density.

The shape of a rack is typically a rectangular parallelepiped, but the shape is not limited thereto, and may be a shape such that the side surfaces or the bottom surface is not planar but is curved. Furthermore, a rack may be formed by combining pillars in a grid pattern. When a rack is formed by combining pillars in a grid pattern, there is no need to particularly provide a special opening(s) since gaps for housing tubular containers are formed among pillars.

A rack may be provided with a rack lid for preventing the scattering of tubular containers, but such a lid is not always required. Tubular containers and a rack may be covered with a protective film or the like for prevention of scattering.

Furthermore, a rack wherein a plurality of tubular containers containing the silica powder are housed upright may be packaged in a bag. Such a bag has an opening and may be any bag as long as a rack wherein a plurality of tubular containers are housed upright can be packed therein, and the size and material thereof are determined as appropriate.

For quantitative feeding of the silica powder for quantitative feeding, various known powders and filling with powders can be employed, and the types thereof are not particularly limited. Further, if necessary, quantitative feeding can be performed in cooperation with a deaerator, a vacuum device, a sterile device, a packing device, a bag feeder, and the like.

EXAMPLES

Hereinafter, the content of the present invention will be described more specifically with reference to examples and Comparative Examples, but the present invention is not limited to the examples unless departing from the gist of the invention. Note that the following values of various production conditions and evaluation results in the following examples refer to preferred values of the upper or lower limits in the embodiments of the present invention. A preferred range may be a range specified through combination of the value of the above upper or lower limit and a value or values of the following examples.

<Example 1, Comparative Examples 1-3>

(1) Preparation of Silica Powder

First, based on the examples described in Japanese Patent Laid-Open No. 2002-80217, tetramethoxysilane was hydrolyzed by the following method, thereby synthesizing silica gel. Pure water (1000 g) was introduced into a 5 L separable flask (with a jacket) made of glass and fitted with a water-cooled condenser for atmospheric releasing at the top. Tetramethoxysilane (1400 g) was introduced into the water for 3 minutes while stirring at 80 rpm. The molar ratio of water/tetramethoxysilane was about 6. Hot water at 50°C was passed through the separable flask jacket. Subsequently stirring was continued and when the content reached the boiling point, stirring was stopped. Thereafter, the generated sol that had been generated with hot water at 50°C passing through the jacket for about 0.5 hours was gelled. Gel was then promptly removed and then passed through a nylon net with a mesh opening of 1.2 mm for pulverization, thereby obtaining a particulate wet gel (silica hydrogel). The hydrogel (450 g) and 450 g of pure water were introduced into a 1 L glass autoclave, and then subjected to hydrothermal treatment at a treatment temperature of 130°C for a treatment time of 3 hours. After hydrothermal treatment, the resultant was filtered through No. 5A filter paper. The filter cake was vacuum dried without washing with water so that it reached a constant weight at 100°C, thereby obtaining a dry silica gel. The thus obtained silica powder was mesoporous silica having meso pores with an average pore diameter of 4 nm.

(2) Preparation of Silica Powder for Quantitative Feeding

Next, the thus obtained silica gel was classified as follows. Note that, classification was performed with a sieve according to JIS Z8801-1982 standards by sieving using a vibratory classifier until a change in the weight of the silica gel on the sieve was 1% or less in accordance with JIS K0069. Note that the term "particles with a sieve size of x to y $\mu$m" refers to particles that pass through a sieve with a mesh opening of y $\mu$m, but do not pass through a sieve with a mesh opening of x $\mu$m when sieved. First, a sieve with a mesh opening of 75$\mu$m and a sieve with a mesh opening of 900 $\mu$m were used, and thus a silica gel having a particle size (sieve size) of 75 $\mu$m to 900 $\mu$m was obtained. Further, the silica gel was subjected to classification using a sieve with a mesh opening of 106 $\mu$m and a sieve with a mesh opening of 250 $\mu$m, thereby obtaining a sample (Example 1) having a particle size (sieve size) of 106 $\mu$m to 250 $\mu$m, a sample (Comparative Example 1) having a particle size (sieve size) of 106 $\mu$m or less, and a sample (Comparative Example 2) having a particle size (sieve size) of 250 $\mu$m or more. Also, in the same manner, classification was performed using a sieve with a mesh opening of 106 $\mu$m and a sieve with a mesh opening of 425 $\mu$m, thereby obtaining a sample (Comparative Example 3) having a particle size (sieve size) of 106 $\mu$m to 425 $\mu$m.

(3) Evaluation of Quantitative Feeding Performance and Handleability

Each of the thus obtained samples was weighed so that the weight was a target weight set at 100.0 mg and then a container was filled with the sample using a filling machine PF-5-AD (screw-type filling machine, Ikeda Machine Industry Co., Ltd.). Each sample was weighed 10 consecutive times, and average filling amount f (mg), discrepancy amount $\Delta$ (mg) between the target weight and average filling amount f, standard deviation $\sigma$ (mg), and, standard deviation $\sigma$ (mg)/average filling amount f (%) were calculated each time. Measurement results and evaluation results are shown in Table 1.

Table 1

|  | Example 1 | Comparative Example 1 | Comparative Example 2 | Comparative Example 3 |
|---|---|---|---|---|
| Classification mesh size ($\mu$m) | 106/250 | <106 | >250 | 106/425 |
| Target weight | 100.0 mg | 100.0 mg | 100.0 mg | 100.0 mg |
| First | 99.8 | 95.2 | 92.2 | 100.8 |
| Second | 100.1 | 94.2 | 89.4 | 100.1 |
| Third | 100.2 | 95.8 | 91.1 | 101.7 |
| Fourth | 99.8 | 95.1 | 89.2 | 98.9 |
| Fifth | 100.6 | 96.1 | 91.1 | 101.1 |
| Sixth | 100.6 | 96.2 | 89.9 | 98.7 |
| Seventh | 101.4 | 95.9 | 91.2 | 102.9 |
| Eighth | 99.0 | 95.7 | 89.5 | 98.4 |
| Ninth | 100.3 | 96.1 | 90.4 | 102.1 |
| Tenth | 101.1 | 96.3 | 91.4 | 98.9 |
| Average filling amount f (mg) | 100.3 ○ | 95. 7 △ | 90.5 × | 100.4 ○ |
| Discrepancy amount $\Delta$ (mg) | 0.3 ○ | -4.3 △ | -9.5 × | 0.4 ○ |
| Standard deviation $\sigma$ | 0.7 ○ | 0.5 ○ | 1.0 × | 1.6 × |
| $\sigma$/f (%) | 0.7% ○ | 0.5% ○ | 1.1% × | 1.6% × |
| Handleability | ○ | × | ○ | ○ |

As apparent from Table 1, discrepancy amount $\Delta$ relative to the target weight reached 4.3% to 9.5% in the cases of the sample (Comparative Example 1) with a sieve size of less than 106 $\mu$m and the sample (Comparative Example 2) with a sieve size of greater than 250 $\mu$m. The reason for this is that in the case of the sample with a sieve size of less than 106 $\mu$m (Comparative Example 1), microparticles were adhered to the inner wall of the screw of the filling machine and thus the amount of the powder used for filling did not reach the target filling amount. Moreover, in the case of the sample (Comparative Example 2) with a sieve size of greater than 250 $\mu$m, gaps were formed in the screw of the filling machine, and thus the container could not be filled with the target filling amount of the silica powder. Therefore, it was demonstrated that the presence of microparticles with a sieve size of less than 106 $\mu$m and the presence of coarse particles with a sieve size of greater than 250 $\mu$m increased the amplitude upon weighing, and was a factor leading to a significant variation in weighing accuracy.
Further, the samples (Comparative Examples 2 and 3) containing coarse particles with a sieve size of greater than 250 $\mu$m could not achieve less than 1% of the standard deviation relative to the average filling amount. Therefore, it was demonstrated that the presence of coarse particles with a sieve size of greater than 250 $\mu$m increased the amplitude upon filling and was a factor leading to a significant variation in weighing accuracy.
Further, it was confirmed through comparison between Example 1 and Comparative Example 3 that amplitude upon filling was reduced by narrowing the size of a classification mesh from 106/425 $\mu$m to 106/250 $\mu$m. Therefore, setting a narrow classification mesh size can reduce the lot-to-lot difference of the total surface area of the silica powder used for filling, and thus is expected to exhibit an effect of lowering the amplitude of the amount of a drug to be carried when the drug is carried by the silica powder, for example.
On the other hand, in the case of the sample with a sieve size of less than 106 $\mu$m (Comparative Example 1),

the silica powder's own handleability was poor such that adhesion of microparticles to the inner wall of the container arised, for example. In this case, specifically a case of a capped container filled with the silica powder is problematic in that the silica powder cannot be easily removed from the container, and the amount of the silica powder that can be actually removed or the amount of the silica powder carrying a drug is smaller than the filling amount, for example, because of the silica powder adhering to the inner wall of the container or the inner side of the cap. Hence, practically, handleability should be improved. Moreover, when a biological sample is injected into a container for adsorption of peptides and the like to the silica powder in the container, once silica powder particles are adsorbed onto a cap and the like, silica powder particles adhered onto the cap cannot be used as an adsorbent.

(4) Measurement of Angle of Repose and Bulk Density

Results of measuring the angle of repose and bulk density of the silica powder of Example 1 are shown in Table 2. In addition, a method for each measurement is as described below.

[Angle of Repose]

The angle of repose was measured by a cylindrical rotation method using a repose angle measuring instrument (Tsutsui Scientific Instruments, Co., Ltd.). A cylindrical sample container was washed well, dried, and then filled with a sample to about a half of the cylinder volume. After 3 minutes of rotation at 2 rpm, rotation was stopped, and then the angle of repose was measured. Measurement was performed three times, and the average value was designated as bulk density.

[Bulk Density]

Bulk density was measured using a bulk density measuring instrument (in accordance with JIS K6891) (Tsutsui Scientific Instruments, Co., Ltd.). A sample was introduced into a funnel of a specific gravity meter with a damper inserted thereinto, the damper was quickly pulled out to drop the sample into a weighing bottle. An excess sample portion from the weighing bottle was leveled off using a flat plate and then the weight was measured for calculation. Measurement was performed 3 times, and the average value was designated as the bulk density.

Table 2

|  | Angle of repose (degree) | Bulk density (g/ml) |
|---|---|---|
| First | 28.0 | 0.58 |
| Second | 28.0 | 0.57 |
| Third | 28.0 | 0.58 |
| Average value | 28.0 | 0.58 |

(5) Measurement of Particle Diameter Before and After Weighing and Filling

Next, changes in particle diameter before and after weighing and filling were confirmed since the silica powder may have been crushed by segregation within a hopper or mechanical contact with a screw or the like upon weighing and filling. Particle size distribution was measured using Microtrac MT3300EX II (NIKKISO Co., Ltd.), which is a laser diffraction-scattering type particle size distribution measuring device to find the values of D10, D50, and D90 before and after filling, thereby confirming changes in particle diameter before and after weighing and filling. Table 3 shows particle diameters after weighing and filling represented by values relative to the particle diameters before weighing and filling.

Table 3

|  | Average filling amount (mg) | Standard deviation $\sigma$ (mg) | $\sigma$/f (%) | Particle diameter after weighing·filling (value relative to that before treatment) | | |
|---|---|---|---|---|---|---|
|  |  |  |  | $D_{90}$ | $D_{50}$ | $D_{10}$ |
| Example 1 | 100.3 | 0.7 | 0.7 | 1.04 | 1.05 | 1.03 |

(continued)

|  | Average filling amount (mg) | Standard deviation $\sigma$ (mg) | $\sigma/f$ (%) | Particle diameter after weighing·filling (value relative to that before treatment) | | |
|---|---|---|---|---|---|---|
|  |  |  |  | $D_{90}$ | $D_{50}$ | $D_{10}$ |
| Comparative Example 1 | 95.7 | 0.5 | 0.5 | 1.00 | 1.01 | 0.96 |
| Comparative Example 2 | 90.5 | 1.0 | 1.1 | 0.99 | 0.90 | 0.50 |
| Comparative Example 3 | 100.4 | 1.6 | 1.6 | 0.94 | 0.89 | 0.81 |

As apparent from Table 3, the silica powder (Comparative Example 2) with a sieve size of greater than 250 $\mu$m and the silica powder (Comparative Example 3) with a sieve size of 106/425 $\mu$m were each found to have a cumulative 10% particle diameter (D10) decreased by about 20% to 50%. Such changes in D10 may be because the silica powder was crushed in the filling machine or filling with particles was performed in an ascending order of size (from the smallest to the largest) within the filling machine wherein coarse particles and microparticles were unevenly distributed. It was demonstrated also from this view point that the silica powder (Comparative Example 2) with a sieve size of greater than 250 $\mu$m and the silica powder (Comparative Example 3) with a sieve size of 106/425 $\mu$m are inappropriate.

The present invention is described in detail with reference to specific embodiments, but it is obvious to persons skilled in the art that various changes and modifications can be made without departing from the spirit and the scope of the present invention. The present application is on the basis of Japanese Patent Application filed on November 16, 2016 (Japanese Patent Application No. 2016-223067), and contents of which are incorporated herein by reference.

INDUSTRIAL APPLICABILITY

The silica powder for quantitative feeding of the present invention is excellent in handleability and quantitative feeding performance, and can be suitably used in various applications requiring such properties. For example, the silica powder can be broadly and effectively used for drying agents, humidifying agents, deodorants, agricultural fertilizers, catalyst carriers, abrasives, filter aids, separating agents, adsorbents, cosmetic carriers, food additives, selective adsorption and desorption agents for biomaterials, drug carriers, and the like.

REFERENCE SIGNS LIST

1    Tubular container
2    Lid of tubular container
3    Rack
4    Individual compartment (Opening)

**Claims**

1. A silica powder for quantitative feeding, wherein 99 mass% or more of particles pass through when the silica powder is sieved through a sieve with a nominal mesh opening of 250 $\mu$m in accordance with JIS standard sieve list (JIS Z8801-1982) for 1 minute, and a mass change on a sieve with a nominal mesh opening of 106 $\mu$m is 1 mass% or less, when the silica powder is sieved through the sieve for 1 minute.

2. The silica powder for quantitative feeding according to claim 1, wherein said silica powder comprises non-crystalline silica.

3. The silica powder for quantitative feeding according to claim 1 or 2, wherein said silica powder comprises mesoporous silica having meso pores with a pore diameter of 2 nm to 50 nm.

4. The silica powder for quantitative feeding according to any one of claims 1 to 3, wherein said silica powder has a pore volume per unit weight of 0.1 ml/g to 1.5 ml/g.

5. The silica powder for quantitative feeding according to any one of claims 1 to 4, wherein said silica powder has a specific surface area of 100 $m^2$/g to 1200 $m^2$/g.

6. A purification kit for a biomaterial, comprising at least:

   one or more containers having a plurality of individual compartments; and
   the silica powder for quantitative feeding according to any one of claims 1 to 5, wherein
   said individual compartments of said one or more containers are each filled with the silica powder in such a manner that average filling amount f (mg) and standard deviation σ (mg) satisfy the following condition:

   ```
   standard deviation σ (mg)/average filling amount f (mg) = less
   than 1.0 (%),
   ```

   wherein the above condition, the number of samples "n" is at least 10.

7. A method for producing a purification kit for a biomaterial, comprising at least:

   a step of preparing one or more containers having a plurality of individual compartments; and
   a step of quantitatively feeding the silica powder for quantitative feeding according to any one of claims 1 to 5 into said individual compartments of said one or more containers in such a manner that average filling amount f (mg) and standard deviation σ (mg) satisfy the following condition:

   ```
   standard deviation σ (mg)/average filling amount f (mg) = less
   than 1.0 (%),
   ```

   wherein the above condition, the number of samples "n" is at least 10.

## INTERNATIONAL SEARCH REPORT

| | International application No. |
|---|---|
| | PCT/JP2017/041089 |

### A. CLASSIFICATION OF SUBJECT MATTER
Int.Cl. C01B33/12(2006.01)i, A61K47/04(2006.01)i, C01B33/18(2006.01)i, C01B37/02(2006.01)i, G01N30/88(2006.01)i

According to International Patent Classification (IPC) or to both national classification and IPC

### B. FIELDS SEARCHED

Minimum documentation searched (classification system followed by classification symbols)
Int.Cl. C01B33/00-33/193, A61K47/04, C01B37/02, G01N30/88

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)
JSTPlus/JST7580/JSTChina (]DreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2016/017811 A1 (NIPPON KASEI CHEMICAL CO., LTD.) 04 February 2016, claims (Family: none) | 1–7 |
| A | JP 2012-211070 A (MITSUBISHI MATERIALS CORP.) 01 November 2012, claims, examples 1-2 & US 2014/0065423 A1 & EP 2690066 A1 & CN 103249674 A & KR 10-2014-0002673 A | 1–7 |
| A | JP 9-86919 A (MITSUBISHI CHEMICAL CORP.) 31 March 1997, paragraph [0013] (Family: none) | 1–7 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 January 2018 (26.01.2018) | 06 February 2018 (06.02.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011225380 A
- JP 2013230955 A
- WO 2016017811 A
- JP 2002080217 A
- JP 2008222552 A
- JP 2016223067 A

**Non-patent literature cited in the description**

- **E. P. BARRETT ; L. G. JOYNER ; P. H. HAKLENDA ; J. AMER.** *Chem. Soc.,* 1951, vol. 73, 373